# EUROPÄISCHE PATENTSCHRIFT

(11) **EP 0 367 084 B1**
(45) Veröffentlichungstag und Bekanntmachung des Hinweises auf die Patenterteilung: **23.02.1994**
(21) Anmeldenummer: 89119796.4
(22) Anmeldetag: 25.10.1989
(51) Int. Cl.: B65G 53/30, A01F 25/20

(54) **Vorrichtung zum Austragen und Vermischen von stückigem Material mit einer Flüssigkeit**
Device for unloading and mixing a fragmented material with a liquid
Dispositif pour décharger et mélanger de la matière fragmentée avec un liquide

(30) Priorität: 03.11.1988 DE 8813726 U
(43) Veröffentlichungstag der Anmeldung: 09.05.1990
(73) Patentinhaber: HAAKE, Hinrich, D-22926 Ahrensburg (DE)
(72) Erfinder: HAAKE, Hinrich, D-22926 Ahrensburg (DE)
(74) Vertreter: DIEHL GLAESER HILTL & PARTNER

(56) Entgegenhaltungen:
- DE-A- 3 539 635
- DE-A- 3 541 704
- FR-A- 2 103 457

## Beschreibung

Die Erfindung bezieht sich auf eine Vorrichtung zum Austragen und Vermischen von körnigem oder stückigem Futtermais, der sich aus Maiskörnern, zerkleinerten Spindeln und Lieschblättern zusammensetzt, mit einer Flüssigkeit aus einem Silobehälter mittels Druckwasserstrahlen, wobei im Silobehälter unten in seinem tiefsten Bereich ein Auslaß für den Futtermais und die Flüssigkeit vorgesehen ist, von welchem aus der Futtermais und die Flüssigkeit mittels einer Förderschnecke aus dem Silobehälter heraus in einen Siphonbehälter über eine Zerkleinerungsmühle zu einem Tank gefördert werden. Die Erfindung befaßt sich mit Problemen, die im Zusammenhang mit Maismischfutter auftreten, wenn dieses in senkrecht angeordneten Silobehältern aufbewahrt wird.

Ein derartiges Mischfutter besteht aus mehreren sehr ungleichen Bestandteilen, nämlich zum einen aus den Maiskörnern selbst, die im Bereich einiger Millimeter bis zu einem Zentimeter Abmessung liegen. Hinzukommen Spindeln, die zum Teil zerkleinert worden sind, die jedoch Abmessungen in der Größenordnung von einigen Zentimetern haben. Schließlich sind auch noch Lieschblätter im Mischfutter vorhanden, diese können eine Länge von 10 bis 15 cm haben, sie können miteinander oder mit anderen Teilen des Mischfutters verkleben und kleine Ballen und dergl. bilden.

Das Maismischfutter wird in Silobehältern aufbewahrt, wobei sich bei den auftretenden Gährungsprozessen Silagesäfte bilden, die zum Verkleben der einzelnen Bestandteile miteinander beitragen. Ein derartiges Mischfutter ist von sich aus nicht homogen und gleichmäßig, d.h. die einzelnen Teile fallen in einer Raumeinheit nicht in der gleichen Häufigkeit an. Aber selbst wenn dies der Fall wäre, so tritt bei der Vermischung des Mischfutters mit Wasser keine gleichmäßige Verteilung dieser Bestandteile im Wasser auf, was nun wiederum eine zwingende Voraussetzung für die Verfütterung, insbesondere die automatische Verfütterung ist. Hierbei ist zu berücksichtigen, daß man in einem Tank Futter und Wasser in einer bestimmten Zusammensetzung zur Verfügung haben möchte, so daß diese gemischten Materialien zu den Futterplätzen ohne Probleme gegeben werden können.

In der Praxis ist beim Einsatz derartiger Austrag- und Mischvorrichtungen damit zu rechnen, daß die Zerkleinerungsmühle teilweise sehr hohe Anteile an körnigem Material zermahlen muß und andererseits teilweise geringere Mengen erhält und somit mehr oder weniger nur Flüssigkeit durchläßt. Es ist insbesondere diese ungleichmäßige Belastung der Mühle und des zugehörigen Antriebes, die in der Praxis zu Problemen führt.

Wenn bislang beispielsweise festgestellt wurde, daß der Zerkleinerungsmühle zu wenig körniges Material zugeführt wird, so ist versucht worden durch eine verstärkte Wirkung der Druckwasserstrahlen eine größere Menge körniges Material im Silobehälter zu lösen und über die Förderschnecke herauszutransportieren. Dies mag vom theoretischen Ansatz her richtig sein, es bringt jedoch mit sich, daß durch plötzliches Lösen einer größeren Menge an körnigem Material wiederum eine stärkere Überlastung des Antriebes für die Zerkleinerungsmühle auftritt. Hinzukommt noch, daß nicht unbeschränkt Wasser für die Zufuhr zu der Austrageinrichtung zur Verfügung steht, da dieses im bestimmten Verhältnis mit dem festen Material gemischt werden soll.

Bei einem bekannten Verfahren (DE-A-3 541 704) wird zur Herstellung eines Flüssigfutters aus Silage und Flüssigkeit die Silage im Bereich des Silos in der Flüssigkeit aufgeschwemmt, mittels einer Fräse mechanisch abgetragen, mit Flüssigkeit vermischt und die gebildete Aufschwemmung unter weiterer Zugabe von Silage so lange in einem Kreislauf geführt, bis die vorgegebene Konzentration der Silage in der Aufschwemmung erreicht wird. Es handelt sich hierbei um einen theoretischen Ansatz für ein Problem, in der Praxis hat sich gezeigt, daß das bekannte Verfahren sich mit plötzlich lösenden größeren Mengen an Silage nicht fertig wird, so daß verhältnismäßig große Umlaufzeiten erforderlich sind.

Bei einer bekannten Vorrichtung zur Entleerung von CCM-Schrot-Silage aus einem geschlossenen Hochsilo (DE-A-3 539 635) befindet sich im unteren Teil des Silos eine absperrbare Wasserleitung, eine Saugpumpe und eine gehäusefreie Förderschnecke, die die anfallende Silage aufnehmen soll. In der Praxis hat sich herausgestellt, daß durch diese Anordnung keine gleichmäßige Zulieferung erreicht werden kann, da teilweise die Schnecke vollkommen frei in einer Art Tunnel läuft und nur in Ausnahmefällen gleichmäßig mit Silage beaufschlagt wird.

Bei einer bekannten Vorrichtung, um ein Trägerfluid mit fein pulverisiertem Material zu beladen (FR-A-2 103 457), wird im unteren Teil eines Behälters für das pulverisierte Material eine Niveaumessung durchgeführt und deren Ergebnis eingesetzt, um die Menge des aus dem Behälter gelösten Materials zu variieren. Eine solche Vorrichtung kann jedoch nur auf pulverförmiges Material angewendet werden, was bei Maisfutter bekanntermaßen nicht der Fall ist. Bei Maisfutter wird nicht nur eine gleichmäßige Vermischung mit der Flüssigkeit gewünscht, darüber hinaus ist die insgesamt zugegebene Wassermenge begrenzt und es ist noch zu berücksichtigen, daß sich gelegentlich ein erheblich höherer Anteil an Futtermais löst.

Die Erfindung befaßt sich mit den vorgenannten Problemen und schlägt zur Lösung eine Steuerung des Flüssigkeitsstandes im Auslaß des Silobehälters vor, wobei hierzu eine Lichtquelle und eine mit dieser zusammenwirkenden Fotozelle eingesetzt wird, durch die der Flüssigkeitsstand an der Auslaßstelle des Silobehälters erfaßt werden kann. Die von der Fotozelle erzeugten Signale können in verstärkter Form an die Einrichtung weitergegeben werden, die dazu dient, das körnige Material in dem Silobehälter zu lösen, also beispielsweise Schneidstrahlen, eine Fegeschnecke oder eine Kette.

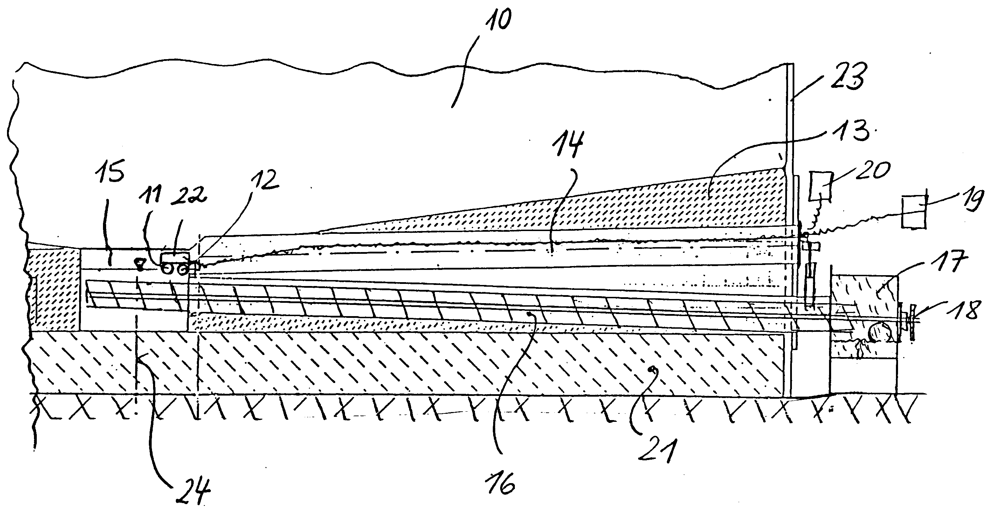

Die Erfindung wird nachstehend anhand der Zeichnung beispielsweise erläutert.

Die Zeichnung zeigt eine schematische Darstellung durch den unteren Teil eines Silobehälters, an dem eine Vorrichtung gemäß der Erfindung angebracht ist.

In der Zeichnung ist der untere Teil eines Silobehälters 10 gezeigt. Es handelt sich hierbei um einen zylindrischen Behälter, der auf einem Fundament 21 ruht. Mit 23 ist die Behälterwand bezeichnet, bei 24 ist etwa die Mittelachse des Silobehälters 10 zu denken.

Im unteren Teil des Behälters befindet sich eine trichterförmige Führung 13, die bewirken soll, daß das gelöste Material sich an der tiefsten Stelle des Behälters 10 sammelt, nämlich dort, wo sich der Auslaß 15 befindet. Es ist üblich, das sich dort ansammelnde Material über eine Förderschnecke 16 aus dem Silobehälter 10 herauszutransportieren und es einem Siphonbehälter 17 zu übergeben. Von dorther gelangt das Material über eine Zerkleinerungsmühle 18 ( schematisch angedeutet ) in einen nichtgezeigten Tank.

In der Figur ist nicht gezeigt, auf welche Art und Weise das Material im Silobehälter 10 gelöst wird. Hier können beispielsweise rotierende Flüssigkeitsstrahlen, eine rotierende Schnecke oder eine rotierende Kette eingesetzt werden, die von unten her Material abtragen, das über den Trichter 13 in den Auslauf 15 gelangt.

Gemäß der Erfindung ist im Bereich des Auslaufes 15 an geeigneter Höhe eine Lichtquelle 11 sowie eine Fotozelle 12 angeordnet, die nach oben hin gegenüber dem eintretenden Material durch ein Schutzteil 22 geschützt sind. Über ein zusätzliches von außen her über den Silobehälter 120 hineingeführtes Rohr 14 gelangen die Steuerleitungen zu der Steuerung 19, die dazu dient, beispielsweise die Druckpumpe zu regeln, die wiederum Druckwasserstrahlen erzeugt, die zum Abtragen des Materials im Silobehälter 10 dienen. Entsprechend kann auch über die Steuerung 19 erreicht werden, daß die Förderschnecke 16 mehr oder weniger Material fördert, was vom Flüssigkeitsstand im Auslaß 15 abhängt. Mit 20 ist eine Steuerung gezeigt, die wiederum für die Lichtquelle 11 gedacht ist. Handelt es sich bei der Lichtquelle beispielsweise um eine Neonröhre, so beinhaltet die Steuerung 20 das Vorschaltgerät.

## Patentansprüche

1. Vorrichtung zum Austragen und Vermischen von körnigem oder stückigem Futtermais, der sich aus Maiskörnern, zerkleinerten Spindeln und Lieschblättern zusammensetzt, mit einer Flüssigkeit aus einem Silobehälter (10) mittels Druckwasserstrahlen wobei im Silobehälter unten in seinem tiefsten Bereich ein Auslaß (15) für den Futtermais und die Flüssigkeit vorgesehen ist, von welchem aus der Futtermais und die Flüssigkeit mittels einer Förderschnecke (16) aus dem Silobehälter heraus in einen Siphonbehälter (17), über eine Zerkleinerungsmühle (18) zu einem Tank gefördert werden, und im Auslaß (15) eine auf den Flüssigkeitsstand ansprechende, Ausgangssignale zur Steuerung der Druckwasserstrahlen zum Austragen des Futtermais und zur Steuerung des Antriebes der Förderschnecke (16) erzeugende Lichtquelle-Fotozelle-Anordnung (11, 12 ) angebracht ist, die nach oben hin durch einen Schutzteil (22) geschützt ist.

## Claims

1. Device for unloading and mixing a granular or fragmented food corn, composed of grains of corn, crushed stems and wrapping leaves, with a liquid from a silo container (10) by means of pressure water jets, with the silo container being provided in its lowest section with an outlet (15) for the food corn and the liquid, from which the food corn and the liquid are transported by means of a spiral conveyer (16) out of the silo container into a siphon container (17), over a crushing mill (18) to a tank, and with an arrangement of a luminous source (11) and a photocell (12) being positioned in the outlet (15) that responds to the level of liquid and produces output signals for the control of the pressure water jets for unloading the food corn and for controlling the drive of the spiral conveyer (16) that is protected towards the top by a protective part (22).

## Revendications

1. Dispositif pour décharger et mélanger avec un liquide du maïs fourrage en grains ou en morceaux, qui se compose de grains de maïs, de centres d'épis de maïs broyés et de feuilles d'enveloppe, à partir d'un silo (10), à l'aide de jets d'eau sous pression, dispositif dans lequel il est prévu, dans la partie la plus basse du silo, une sortie (15) pour le maïs fourrage et le liquide, à partir de laquelle le maïs fourrage et le liquide sont extraits du silo à l'aide d'une vis de transport (16) vers un récipient formant siphon (17) et, en passant à travers un broyeur (18), vont jusqu'à un réservoir, et un ensemble à source lumineuse et cellule photo-électrique (11,12) est disposé dans la sortie (15) pour émettre des signaux correspondant à l'état du liquide afin de commander les jets d'eau sous pression pour la décharge du maïs fourrage et pour commander l'entraînement de la vis de transport (16), ledit ensemble étant protégé vers le haut par une pièce de protection (22).
